**Europäisches Patentamt**

**European Patent Office**

**Office européen des brevets**

(11) Veröffentlichungsnummer: **0 317 962**
**A2**

(12) **EUROPÄISCHE PATENTANMELDUNG**

(21) Anmeldenummer: **88119431.0**

(22) Anmeldetag: **22.11.88**

(51) Int. Cl.⁴: **B60R 22/46 , B60R 21/00**

(30) Priorität: **27.11.87 DE 3740353**

(43) Veröffentlichungstag der Anmeldung:
**31.05.89 Patentblatt 89/22**

(84) Benannte Vertragsstaaten:
**DE ES FR GB IT SE**

(71) Anmelder: **BRITAX-KOLB GMBH & CO**
**Theodor-Heuss-Strasse 2**
**D-8060 Dachau(DE)**

(72) Erfinder: **Knabel, Walter, Dr.**
**Nockstrasse 13**
**D-8110 Murnau/Staffelsee(DE)**
Erfinder: **Notar, Walter, Dipl.-Ing.**
**Valeriestrasse 43**
**D-8044 Unterschleissheim(DE)**

(74) Vertreter: **Gossel, Hans K., Dipl.-Ing.**
**Rechtsanwälte E. Lorenz - B. Seidler**
**Dipl.-Ing. H. K. Gossel Dr. I. Philipps Dr. P.B.**
**Schäuble Dr. S. Jackermeier - Dipl.-Ing. A.**
**Zinnecker**
**Widenmayerstrasse 23 D-8000 München**
**22(DE)**

(54) **Beschleunigungssensor für Sicherungssysteme von Kraftfahrzeugen.**

(57) Ein Beschleunigungssensor für Sicherheitssysteme von Kraftfahrzeugen, vorzugsweise für Sicherheitsgurtsysteme und sogenannte Schloßstrammer, besteht aus einer verschieblich geführten Sensormasse, die durch Haltemittel in ihrer Ruhelage gehalten ist und die bei Auslenkung aus ihrer Ruhelage infolge des Auftretens vorbestimmter kritischer Beschleunigungswerte über eine Betätigungseinrichtung eine Verriegelungseinrichtung löst. Um sicher zu stellen, daß der Beschleunigungssensor nur bei durch Gefahren oder Unfällen bedingten Beschleunigungen anspricht ist eine Einrichtung vorgesehen, die bei Beschleunigungen, deren Größe die kritischen, an sich ein Auslösung bedingenden Beschleunigungswerte erreicht oder übersteigt, eine Auslösung verhindert und die Auslösung erst bewirkt, wenn die Beschleunigungen über eine Mindestzeit, die für gefahrenbedingte Beschleunigungen typisch ist, angedauert haben.

Xerox Copy Centre

## Beschleunigungssensor für Sicherungssysteme von Kraftfahrzeugen

Die Erfindung betrifft einen Beschleunigungssensor für Sicherheitssysteme von Kraftfahrzeugen, vorzugsweise für Sicherheitsgurtsysteme und sogenannte Schloßstrammer, bestehend aus einer verschieblich geführten Sensormasse, die durch Haltemittel in ihrer Ruhelage gehalten ist und bei Auslenkung aus ihrer Ruhelage infolge des Auftretens vorbestimmter kritischer Beschleunigungswerte über eine Betätigungseinrichtung eine Verriegelungseinrichtung löst.

Ein Beschleunigungssensor dieser Art ist beispielsweise aus der am 17.9.1987 eingereichten Patentanmeldung P 37 31 289.8 der Anmelderin bekannt.

Auf derartige Beschleunigungssensoren wirken nun nicht nur gefahrentypische Beschleunigungen, wie sie bei einem Crash oder unfallbedingten Beschleunigungen oder Verzögerungen auftreten und die zu einem Auslösen bzw. Ansprechen und Aktivieren der Sicherheitssysteme führen sollen, sondern auch Beschleunigungen, die sich aus einem normalen Fahrbetrieb ergeben. Beispielsweise bewirkt ein Fahren durch Schlaglöcher auf das Fahrzeug wirkende Beschleunigungen erheblicher Größe, aber nur von kurzer Dauer. Ist der Beschleunigungssensor in einem Fahrzeugsitz angeordnet, kann auch ein Verstellen des Sitzes und dessen Fahren gegen einen Anschlag Beschleunigungen hervorrufen, die sich an sich in einer zu einer Auslösung führenden Größe bewegen. Derartige bei einem normalen Fahrzeugbetrieb auftretende Beschleunigungen sollen nun aber nicht zu einem Auslösen oder Aktivieren der Sicherheitssysteme durch die Beschleunigungssensoren führen.

Aufgabe der Erfindung ist es daher, einen Beschleunigungssensor der eingangs angegebenen Art zu schaffen, der nur bei durch Gefahren oder Unfällen bedingten Beschleunigungen und nicht bei Beschleunigungen anspricht, die im normalen Fahrbetrieb ihre Ursache haben.

Erfindungsgemäß wird diese Aufgabe bei einem Beschleunigungssensor der eingangs angegebenen Art dadurch gelöst, daß eine Einrichtung vorgesehen ist, die bei Beschleunigungen, deren Größe die kritischen, an sich zu einer Auslösung führenden Beschleunigungswerte erreicht oder übersteigt, eine Auslösung verhindert und erst bewirkt, wenn die Beschleunigungen über eine Mindestzeit, die für Gefahren bedingte Beschleunigungen typisch ist, angedauert haben.

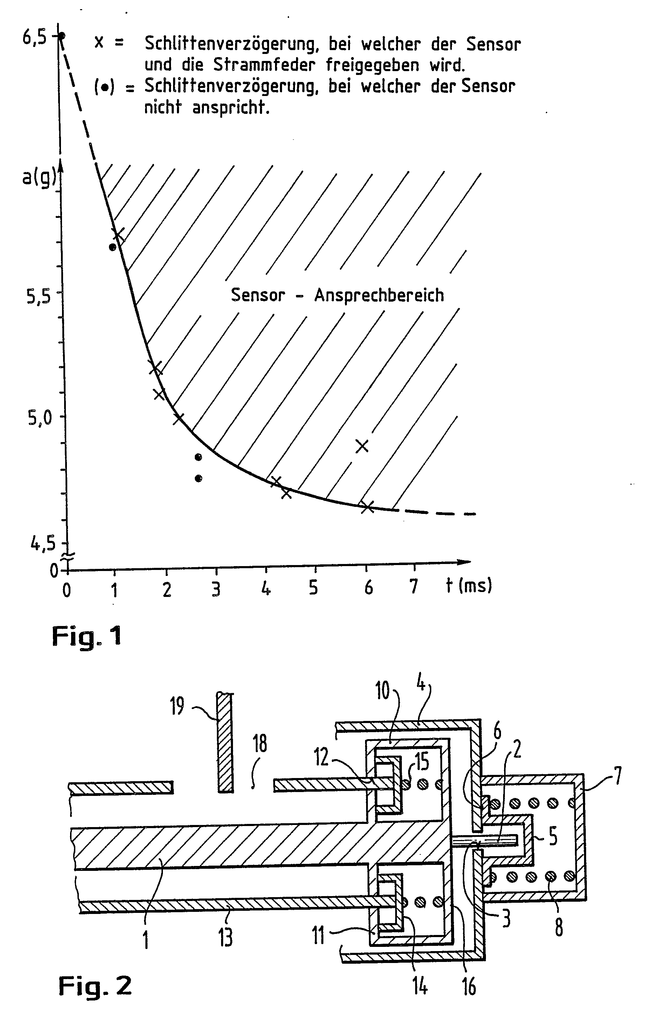

Die Erfindung geht von der Erkenntnis aus, daß die Ansprechzeit üblicher Sensoren bei größer werdenden Beschleunigungen kleiner wird und bei größeren Beschleunigungswerten unmeßbar klein ist. In Fig. 1 ist in einem Diagramm der Ansprechbereich eines üblichen Sensors dargestellt, wobei auf der Ordinate die Beschleunigungswerte und auf der Abszisse die Ansprechzeiten aufgetragen sind. Die in dem Diagramm eingetragenen Werte sind in einer Versuchsanordnung gemessen worden, in der ein Schlitten mit einem auf diesem angeordneten Sensor unterschiedlichen Verzögerungen ausgesetzt worden ist und die Verzögerungswerte ermittelt worden sind, bei welchen der Sensor anspricht und dadurch die Strammerfeder einer Schloßstrammers freigibt. Aus dem Diagramm ist ersichtlich, daß die Ansprechzeit bein 4,7 g etwa 5 ms beträgt, bei 5 g aber nur noch etwa 2 ms. Schon bei 6,5 g ist die Ansprechzeit unmeßbar klein.

Beispielsweise beim Fahren durch Schlaglöcher können sehr hohe Beschleunigungswerte auftreten, die, obwohl sie nur sehr kurzzeitig wirken, zu einem Ansprechen des Sensors und einer Gefahrenauslösung führen. Erfindungsgemäß haben nur derartige aufgrund ihrer Größe im Gefahrenbereich liegende Beschleunigungen eine Auslösung zur Folge, die über eine Mindestzeit, die für gefahrenbedingte Beschleunigungen typisch ist, angedauert haben. Erfindungsgemäß werden also durch den normalen Fahrbetrieb verursachte Beschleunigungen als ungefährliche Beschleunigungen, die nicht zu einer Auslösung führen sollen, dadurch ausgeschieden, daß sie aufgrund ihrer kurzen Einwirkungszeit als ungefährlich erkannt werden.

Beispielsweise kann der erfindungsgemäße Beschleunigungssensor so ausgelegt oder eingestellt werden, daß er erst anspricht, wenn gefährliche Beschleunigungen über eine Zeit von mindestens 2 bis 5 ms angedauert haben.

Durch ein mechanisches System läßt sich die erfindungsgemäße Einrichtung dadurch verwirklichen, daß diese aus einer verschieblich geführten ersten Sensormasse besteht, die einerseits mit einer zweiten Sensormasse, die mit der Betätigungseinrichtung zusammenwirkt, und andererseits mit einem fahrzeugfesten Teil durch mindestens je eine Feder gekuppelt ist. Nach diesem mechanischen System ist die erste Sensormasse durch eine Feder an das Fahrzeug und die zweite Sensormasse durch eine Feder an die erste Sensormasse angekuppelt. Die auf das Fahrzeug wirkende Beschleunigung wird somit über die erste Feder auf die erste Sensormasse übertragen. Erst wenn die erste Sensormasse aufgrund der Kraftwirkung bewegt wird, wird die zweite Feder gespannt, so daß diese auch der zweiten Sensormasse eine Bewegung erteilt. Dadurch tritt eine Verzögerung der Bewegung der zweiten Sensormasse ein, die mit der Auslösebetätigungseinrichtung versehen ist. Die zweite Sensormasse wird dann nicht über die für eine Auslösung erforderliche Strecke bewegt, wenn aufgrund nur kurzfristig wirkender Beschleunigungen die Bewegung der ersten Sensormasse beendet ist, bevor diese über die zweite Feder der zweiten Sensormasse die für die Auslösung erforderliche Beschleunigung erteilt hat.

Durch entsprechende Berechnung läßt sich das aus zwei Federn und zwei Massen bestehende Federmassensystem so auslegen, daß es auf vorherbestimmte Beschleunigungen nur mit einer vorherbestimmbaren Verzögerungszeit, die der gewünschten Ansprechzeit entspricht, anspricht. Das erfindungsgemäße System läßt sich somit entsprechend der gewünschten Auslösecharakteristik auf die einzelnen Fahrzeugtypen abstimmen.

Eine konstruktive Lösung eines erfindungsgemäßen mechanischen Beschleunigungssensor ist Gegenstand des Anspruchs 3.

Der erfindungsgemäße Beschleunigungssensor läßt sich auch durch elektronische Einrichtungen verwirklichen. Nach einer elektronischen Lösung ist vorgesehen, daß eine den Weg der Masse messende elektronische Meßeinrichtung mit einem Meßkopf und eine elektronische Recheneinrichtung vorgesehen sind, die in einer unterhalb der üblichen Ansprechzeit leigenden Zeit aus den Wegmessungen der beschleunigten Masse und aus den diesen zugeordneten Zeitmessungen die Beschleunigung und aus dieser den noch bis zur Gefahrenauslösung gehörenden Weg der Masse bestimmt und die Auslösung einleitet, wenn der Meßkopf diesen Weg gemessen hat. Nach dieser Lösung wird die jeweils wirkende Beschleunigung gemessen und aus dieser Messung der Weg für die Bewegung der Masse bestimmt, der anzeigt, daß es sich aufgrund der Einwirkungsdauer um eine gefährliche Beschleunigung handelt, die zu einer Auslösung führen soll. Wird der errechnete Weg erreicht, erfolgt eine Auslösung. Wird der Weg nicht erreicht, werden die Signale gelöscht und es erfolgt keine Auslösung.

Zweckmäßigerweise wird die Beschleunigung aus zwei Wegmessungen und der zwischen diesen liegenden Zeit bestimmt. Dabei wird mit der Messung erst dann begonnen, wenn die Masse einen Weg zurückgelegt hat, der eine gefährliche Beschleunigungsgröße anzeigt. Auf diese Weise werden ungefährliche, nicht zu berücksichtigende Beschleunigungen ausgeschieden. Aufgrund der beiden Wegmessungen wird dann die Größe der Beschleunigung bestimmt und eine Auslösung erfolgt nur, wenn diese Beschleunigungs über eine Mindestansprechzeit angedauert hat, die sich aus der errechneten Weglänge ergibt.

Nach einer weiteren elektronischen Lösung ist vorgesehen, daß eine den Weg der Masse messende elektronische Meßeinrichtung mit einem Meßkopf und eine elektronische Recheneinrichtung vorgesehen sind, die in einer unterhalb der üblichen Ansprechzeit liegenden Zeit aus den Wegmessungen der bewegten Masse und aus den diesen zugeordneten Zeitmessungen die Beschleunigung bestimmt und daß beschleunigungsproportionale Spannungssignale gebildet werden, die entsprechend der erreichten Spannungsstufe diesen Stufen zugeordnete Kondensatoren laden, die jeweils die Auslösung einleiten, wenn nach einem gefahrentypischen Ladungszustand der Kondensatoren die Beschleunigung noch andauert.

Nach einer weiteren erfindungsgemäßen elektronischen Lösung ist vorgesehen, daß ein Meßwandler die auf diesen von der Sensormasse ausgeübten Kräfte mißt und die Kräfte über die Zeit integriert werden und daß das Zeitintegral der Kraft mit einem Auslöseschwellwert verglichen wird, bei dessen Erreichen die Auslösung erfolgt. Diese Lösung geht davon aus, daß die Masse aufgrund der auf diese wirkenden Beschleunigung den Meßwandler mit einer meßbaren Kraft beaufschlagt. Werden die Kräfte über die Zeit integriert, wird der Impuls gebildet, der die für die Auslösung kritische Größe ist. Durch entsprechende Bestimmung des Auslöseschwellwerts lassen sich dann nur kurzfristig wirkende Beschleunigungen, die beispielsweise aus dem normalen Fahrbetrieb herrühren, als nicht gefahrenbedingt ausscheiden.

Das Zeitintegral kann entsprechend einer eingestellten Zeitkonstante des Integrationsgliedes ständig gegen Null zurückgeführt werden. Diese Ausführungsform erfordert dann keine durch einen unteren Beschleunigungswert bestimmte Grenze, bei der mit der Integration begonnen wird. Als Integrationsglied kann ein Kondensator verwendet werden, der ständig entladen wird, so daß der Schwellwert nur dann erreicht wird, wenn den Kondensator mit beschleunigungsproportionalen Signalen über eine so lange Zeit geladen wird, daß der kritische Auslöseschwellwert erreicht wird.

Nach einer anderen Ausführungsform ist vorgesehen, daß mit der Integration erst begonnen wird, wenn eine eine gefährliche Beschleunigung anzeigende Kraft gemessen wird, und daß die Integration auf Null zurückgeführt wird, wenn der Auslöseschwellwert nicht erreicht wird. Die Auswerteschaltung wird also nur dann aktiviert, wenn eine untere Schwelle überschritten wird. Wird der Auslöseschwellwert durch die Integration nicht erreicht, wird das Integrationsergebnis gelöscht, so daß der beschriebene Meßvorgang bei erneut auftretenden Beschleunigungen wieder eingeleitet werden kann.

Nach einer weiteren Lösung ist vorgesehen, daß die beschleunigte Sensormasse durch elektromagnetische Kräfte derart verzögert wird, daß für Gefahren untypische Beschleunigungswerte ausgeschieden werden.

Nach einer weiteren bevorzugten Ausführungsform ist vorgesehen, daß eine Sensormasse mit Magneten, vorzugsweise Permanentmagneten, verbunden ist, deren Magnetkraft auf eine in einem fahrzeugfesten Rohr oder Rohrsystem mit geschlossenem Kreislauf befindliche magnetisierbare Flüssigkeit wirkt, die in diesem Kreislauf entsprechend der gewünschten Dämpfung gedrosselt wird. Derartige magnetische oder magnetisierbare Flüssigkeiten sin im Handel erhältlich und bestehen aus Suspensionen sehr kleiner Magnetit- oder Ferritteilchen in viskosen Flüssigkeiten. Zur Dämpfung der Sensormassen wird die magnetisierbare Flüssigkeit an den oder die mit der Sensormasse bewegten Magnet oder Magneten magnetisch angekoppelt, wobei durch entsprechende Drosselung der magnetisierbaren Flüssigkeit in dem Kreislauf die gewünschte Dämpfung erreicht wird. Dabei braucht die magnetisierbare Flüssigkeit nur im Bereich der Magnete angeordnet zu sein, wobei der übrige Teil des Rohres oder des Rohrsystems mit einer vorzugsweise hochviskosen Trennflüssigkeit gefüllt ist, die sich mit der magnetisierbaren Flüssigkeit nicht vermischt, so daß diese Trennflüssigkeit in dem Rohr bzw. Rohrsystem von der magnetisierbaren Flüssigkeit gleichsam wie durch einen Kolben verschoben wird.

Eine Dämpfungseinrichtung für rotatorische und translatorische Bewegungen mit einer magnetisierbaren Flüssigkeit, wie sie erfindungsgemäß zur Dämpfung der Sensormasse verwendet werden könnte, ist in der älteren aber nicht vorveröffentlichten Patentanmeldung P 37 27 959 beschrieben worden. Zur weiteren Erläuterung der erfindungsgemäß zur Dämpfung der Sensormasse verwendeten Dämpfungseinrichtung wird daher auf die Patentanmeldung P 37 27 959 Bezug genommen.

In entsprechender Umkehrung kann das Rohr oder das Rohrsystem auch mit der Sensormasse verbunden und der Magnet fahrzeugfest angeordnet sein.

Zweckmäßigerweise ist eine längsverschieblich geführte Sensormasse im Bereich ihrer Stirnseiten mit Magneten mit ebenen Polflächen verbunden, die Anker halten, die nur in Richtung von der Sensormasse weg verschieblich sind, wobei die Magnete von dem gestellfest gehaltenen Rohrsystem mit geschlossenem Kreislauf für die magnetisierbare Flüssigkeit eingefaßt sind. Nach einer bevorzugten Ausführungsform ist vorgesehen, daß die Sensormasse aus einem geschlitzten Rohr mit Kastenprofil besteht, auf dessen durchgehenden gegenüberliegenden Wandungen an jeder Stirnseite je 3 quaderförmige Permanentmagnete im Abstand voneinander befestigt sind, daß zwischen die Magnete die Schenkel eines im Querschnitt H-förmigen Kunststoffkörpers greifen, der durch ein den Mittelsteg verlängerndes und durch den Schlitz des Rohres greifendes Stegteil mit einem fahrzeugfesten Teil verbunden ist, daß die Schenkel zwischen ihren Stirnseiten mit Bohrungen versehen sind und der Mittelsteg eine zu diesen parallele Bohrung aufweist und daß die Stirnseiten des Kunststoffkörpers durch aufgesetzte H-förmige Deckel geschlossen sind, die mit Verbindungskanälen zur Verbindung jeweils einander gegenüberliegender Bohrungen der Schenkel und mit die Verbindungskanäle mit der Bohrung des Mittelsteges verbindenden Kanälen versehn sind, die Drosselstrecken bilden. Durch diese Ausgestaltung wird eine besondere wirksame Dämpfung der Sensormasse erreicht. Zweckmäßigerweise ist die Bohrung des Mittelsteges mit Trennflüssigkeit gefüllt. Die Sensormasse kann durch zwei an ihren Stirnseiten angreifende gestellfeste Blattfedern in Richtung auf ihre Mittelstellung beaufschlagt sein.

Ausführungsbeispiele der Erfindung werden nachstehend anhand der Zeichnung näher erläutert. In dieser zeigt

Fig. 1 ein den Ansprechbereich eines üblichen Sensors darstellendes Diagramm, bei dem die Beschleunigungswerte über der Zeit aufgetragen sind,

Fig. 2 einen Schnitt durch einen mechanischen Beschleunigungssensor in schematischer Darstellung,

Fig. 3 - 5 unterschiedliche Feder-Massensysteme, bei denen der Weg und die Geschwindigkeit der beschleunigten Massen durch einen elektronischen Meßkopf erfaßt werden,

Fig. 6 eine Seitenansicht einer durch magnetisierbare Flüssigkeit gedämpften Sensormasse,

Fig. 7 einen Schnitt durch die Dämpfungsvorrichtung längs der Linie VII-VII in Fig. 6 und

Fig. 8 eine Unteransicht des Deckels, der den die magnetisierbare Flüssigkeit und Trennflüssigkeit enthaltenden Körper stirnseitig verschließt.

In Fig. 1 ist ein aufgrund einer Versuchsanordnung mit einem auf einem Schlitten montierten Sensor aufgenommenes Beschleunigungs-Zeitdiagramm dargestellt, das bereits in der Beschreibungseinleitung erörtert worden ist.

Bei dem Ausführungsbeispiel nach Fig. 2 ist eine stabförmige Sensormasse 1 mit endseitigen fluchtenden Achszapfen 2 versehen, die fluchtende Bohrungen 3 des Gehäuses 4 durchsetzen. Auf die die Gehäusebohrungen 3 durchsetzenden Achszapfen 2 sind hutförmige Kappen 4 aufgesetzt, die die Sensormasse 1 in ihrer Ruhelage halten. Die Achszapfen 2 sind in den hutförmigen Kappen 4 mit radialem Spiel geführt. Die Stirnseiten der Achszapfen 2 liegen an den die hutförmigen Kappen schließenden Wänden an. Allerdings kann zwischen den Wänden und den Stirnseiten der Achszapfen 2 auch ein geringes und daher vernachlässigbares Spiel vorhanden sein. Zwischen den flanschartigen Rändern 6 der hutförmigen Kappen 4 und einer gehäusefesten Wandung 7 sind Druckfedern 8 eingespannt, die die flanschförmigen Ränder 9 in Anlage an die endseitigen Wandungen des Gehäuses 4 halten.

Die stabförmige Sensormasse 1 ist an beiden Enden mit ringförmigen Kammern 10 versehen. Diese ringförmigen Kammern 10 weisen an ihren inneren einander zugewandten Stirnwänden 11 zu der Sensormasse 1 konzentrische ringförmige Schlitze 12 auf, in denen die Enden eines Rohrstücks 13 geführt sind, das eine zweite Sensormasse bildet. Die Enden des Rohrstücks 13 durchsetzen die ringförmigen Schlitze. Auf diese Enden sind Ringe 14 mit U-förmigem Querschnitt aufgesetzt. Diese Ringe sind durch Federn 15 gegenüber den äußeren Wandungen 16 der Kammern 10 abgestützt. Die mit Nuten versehenen Ringe 14 halten die rohrförmige Sensormasse 13 in entsprechender Weise wie die hutförmigen Kappen 4 die erste Sensormasse 1.

In Fig. 2 ist nur die rechte Seite des Beschleunigungssensors dargestellt, deren linke Seite in gleicher Weise ausgebildet ist. Die rohrförmige zweite Sensormasse 13 ist in ihrem Mantel mit einem Schlitz 18 versehen, in den ein Fühler 19 greift, der ein Auslösesignal enthält, wenn die Enden des Schlitzes gegen diesen stoßen.

Der in Fig. 2 dargestellte Beschleunigungssensor besteht aus einem System von zwei durch die Feder 15 miteinander gekoppelten Massen 1, 13, von denen die Masse 1 durch die Feder 8 an ein fahrzeugfestes Teil 4, 7 angekuppelt ist.

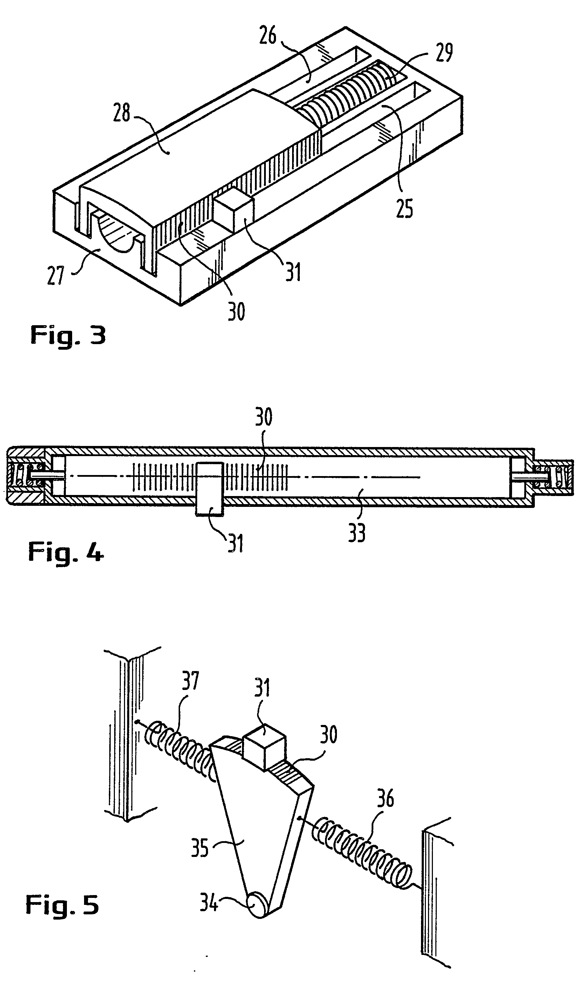

Anhand der Fig. 3 - 5 werden aus Feder-Massen-Systeme bestehende Beschleunigungssensoren beschrieben, bei denen die durch Beschleunigungen hervorgerufenen Bewegungen und Geschwindigkeiten der Massen durch elektronische Meßeinrichtungen erfaßt und ausgewertet werden.

Bei dem Ausführungsbeispiel nach Fig. 3 ist in Führungen 25, 26 einer Führungsschiene 27 eine Masse 28 geführt, die an ein Querjoch der Schiene durch eine Feder 29 angekuppelt ist. Die Ruhelage der Masse 28 kann durch einen Anschlag gesichert sein.

Auf einem Schenkel der U-förmigen Masse ist eine aus Strichen bestehende Codierung 30 vergesehen, die von dem elektronischen Meßfühler 31 erfaßt wird. Wird die Masse 28 aufgrund auftretender Beschleunigungen bewegt, erfaßt der Fühler 31 die Bewegungen der Masse, so daß aus der Codierung die Weglänge und Zeiten und aus diesen die auftretenden Geschwindigkeiten und Beschleunigungen ermittelt werden können.

Bei dem Ausführungsbeispiel nach Fig. 4 erfaßt der Meßkopf 31 eine Codierung 30, die auf einer beidendig abgefederten stabförmigen Masse 33 angeordnet ist.

Bei dem Ausführungsbeispiel nach Fig. 5 ist um die Achse 34 eine sektorförmige Masse 35 schwenkbar gelagert, die durch zwei Federn 36, 37 an fahrzeugfeste Teile angekuppelt ist. Die Masse ist an einem oberen Umfangsrand mit einer Codierung 30 versehen, die von dem Meßkopf 31 erfaßt wird. Entsprechend auftretender Beschleunigungen vollzieht die Masse 35 pendelnde Ausschläge unterschiedlicher Größe.

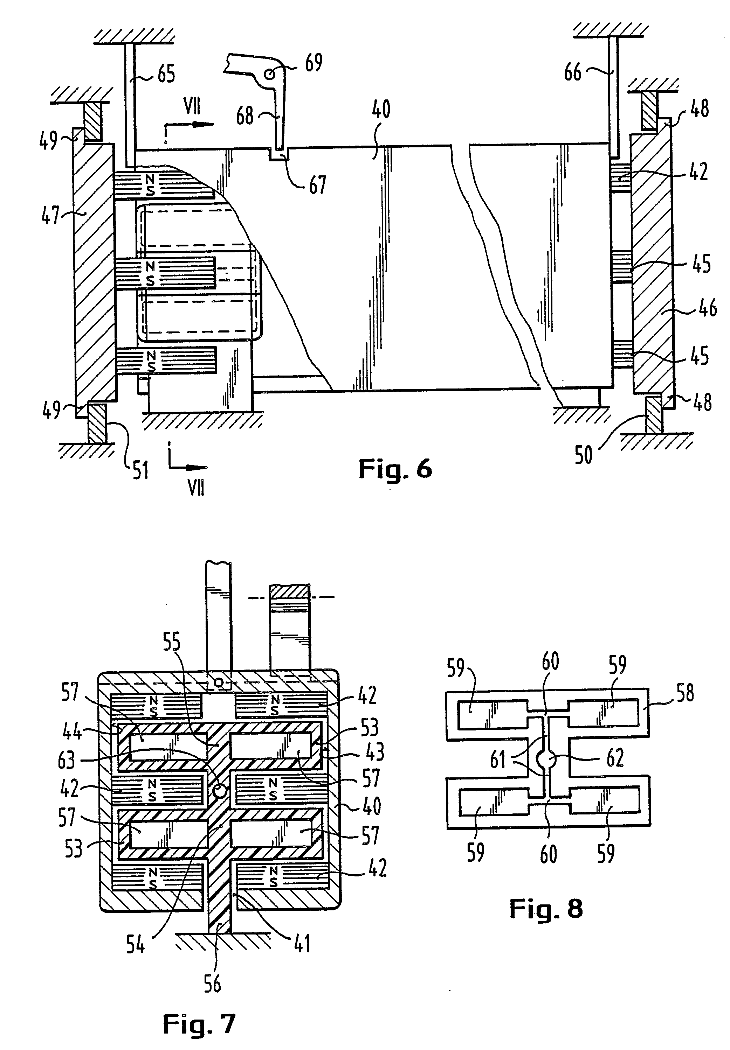

Bei dem Ausführungsbeispiel nach den Fig. 6 bis 8 ist eine Sensormasse 40 vorgesehen, die aus einem Rohr mit rechteckigem Querschnitt besteht, das in seiner unteren Wandung mit einem längsverlaufenden Schlitz 41 versehen ist. Das Rohrstück 40 weist in seinen Endbereichen jeweils 3 paarweise angeordnete Magnete 42 auf, die einander gegenüberliegend an den Seitenwandungen 43,44 des Rohrstücks 40 befestigt sind. Die Magnete 42 bestehen aus quaderförmigen Flachmagneten, deren gegenüberliegenden breiten Seiten die Nord- und Südpole bilden.

Auf den ebenen Polflächen 45 der Flachmagnete 42 liegen als Anker ferromagnetische Platten 46,47 an, die über flanschförmige Ränder oder Stufen bildende Leistenteil 48,49 auf gestellfeste Widerlagerleisten 50,51 in der Weise abgestützt sind, daß die Sensormasse die ferromagnetischen Platten 46,47 nur jeweils nach außen verschieben kann. Die ferromagnetischen Platten 46,47 führen aufgrund der magnetischen Kräfte die Sensormasse 40 über die mit diesen verbundenen Magnete wieder in ihre Mittelstellung zurück, wenn eine Bewegung der Sensormasse erfolgt sein sollte, die nicht zur Auslösung geführt hat.

Zwischen die zwischen den Magneten 42 gebildeten Räume greifen die Schenkel 53 eines im Querschnitt H-förmigen Kunststoff-körpers, dessen Mittelsteg 55 in der aus Fig. 7 ersichtlichen Weise durch ein Stegteil 56 verlängert ist, das durch den Schlitz 41 greift und mit einem fahrzeugfesten Teil verbunden ist. Die Schenkel des Kunststoffkörpers 55 sind von Stirnseite zu Stirnseite mit längsverlaufenden rechteckigen Bohrungen oder Aussparungen 57 versehen. Auf den im Querschnitt H-förmigen Kunststoffkörper sind beidseits H-förmige Deckel 58 aufgesetzt, die die Durchbrüche 57 verschließen. Der Deckel 58 ist mit die Durchbrüche verlängernden Mulden 59 versehen, die durch Verbindungskanäle 60 miteinander verbunden sind. Die Verbindungskanäle 60 sind durch Drosselkanäle 61 mit einer napfförmigen Ausnehmung 62 verbunden, die den Abschluß einer Bohrung 63 bildet, die parallel zu den Durchbrüchen 57 in dem Mittelsteg 55 vorgesehen ist. Während die Durchbrüche 57 mit magnetisierbarer Flüssigkeit gefüllt sind, ist die Bohrung 63 mit einer Trennflüssigkeit gefüllt.

Die Dämpfungsmasse 40 ist durch zwei Blattfedern 65,66, die fahrzeugfest angeordnet sind, in Richtung auf ihre aus Fig. 6 ersichtliche Mittelstellung beaufschlagt. Weiterhin ist die Sensormasse mit einer kurzen endseitig geschlossenen Nut 67 versehen, in deren Mittelbereich der Auslösehebel 68 ragt, der um eine fahrzeugfeste Achse 69 schwenkbar gelagert ist.

**Ansprüche**

1. Beschleunigungssensor für Sicherheitssysteme von Kraftfahrzeugen, vorzugsweise für Sicherheitsgurtsysteme und sogenannte Schloßstrammer, bestehend aus einer verschieblich geführten Sensormasse, die durch Haltemittel in ihrer Ruhelage gehalten ist und die bei Auslenkung aus ihrer Ruhelage infolge des Auftretens vorbestimmter kritischer Beschleunigungswerte über eine Betätigungseinrichtung eine Verriegelungseinrichtung löst,
**dadurch gekennzeichnet,**
daß eine Einrichtung vorgesehen ist, die bei Beschleunigungen, deren Größe die kritischen, an sich eine Auslösung bedingenden, Beschleunigungswerte erreicht oder übersteigt, eine Auslösung verhindert und erst bewirkt, wenn diese Beschleunigungen über eine Mindestzeit, die für gefahrenbedingte Beschleunigungen typisch ist, angedauert haben.

2. Beschleunigungssensor nach Anspruch 1, dadurch gekennzeichnet, daß die Einrichtung aus einer verschieblich geführten ersten Sensormasse besteht, die einerseits mit einer zweiten Sensormasse, die mit der Betätigungseinrichtung zusammenwirkt, und andererseits mit einem fahrzeugfesten Teil durch mindestens je eine Feder gekuppelt ist.

3. Beschleunigungssensor nach Anspruch 2, dadurch gekennzeichnet, daß die erste stabförmige Masse auf einer geradlinigen Achse bzw. zwischen miteinander fluchtenden Achszapfen angeordnet ist, wobei die die Masse beidseits überragenden Achszapfen in fluchtenden Bohrungen von Gehäusewandungen geführt sind, daß auf die die Bohrungen durchsetzenden Enden der Achszapfen hutförmige Kappen aufgesetzt sind und daß zwischen den flanschartigen Rändern der Kappen und fahrzeugfesten Anschlägen Druckfedern eingespannt sind, die in der Ruhelage der Masse die Ränder der hutförmigen Kappen in Anlage an die Wanungen halten, daß die stabförmige erste Masse von einer rohrabschnittförmigen zweiten Masse eingefaßt ist, die in ringspaltförmigen Führungen von endseitigen Führungsgehäusen der ersten Masse geführt ist, und daß auf die die Führungen durchsetzenden Endbereiche der zweiten Masse Nutringe mit U-förmigem Querschnitt aufgesetzt sind, die durch Federn auf den äußeren Wänden des Führungsgehäuses abgestützt sind.

4. Beschleunigungssensor nach Anspruch 1, dadurch gekennzeichnet, daß eine den Weg der Masse messende elektronische Meßeinrichtung mit einem Meßkopf und eine elektronische Recheneinrichtung vorgesehen sind, die in einer unterhalb der üblichen Ansprechzeit liegenden Zeit aus den Wegmessungen der bewegten Masse und aus den diesem zugeordneten Zeitmessungen die Beschleunigung und aus dieser den noch bis zur Gefahrenauslösung gehörenden Weg der Masse bestimmt und die Auslösung einleitet, wenn der Meßkopf diesen Weg gemessen hat.

5. Beschleunigungssensor nach Anspruch 4, dadurch gekennzeichnet, daß die Beschleunigungen aus zwei Wegmessungen und der zwischen diesen liegenden Zeit bestimmt wird.

6. Beschleunigungssensor nach Anspruch 1, dadurch gekennzeichnet, daß eine den Weg der Masse messende elektronische Meßeinrichtung mit einem Meßkopf und eine elektronische Recheneinrichtung vorgesehen sind, die in einer unterhalb der üblichen Ansprechzeit leigenden Zeit aus den Wegmessungen der bewegten Masse und aus den diesem zugeordneten Zeitmessungen die Beschleunigung bestimmt und daß beschleunigungsproportionale Spannungssignale gebildet werden, die entsprechend der erreichten Spannungsstufe diesen Stufen zugeordnete Kondensatoren laden, die jeweils die Auslösung einleiten, wenn nach einem gefahrentypischen Ladungszustand der Kondensatoren die Beschleunigung noch andauert.

7. Beschleunigungssensor nach Anspruch 1, dadurch gekennzeichnet, daß ein Meßwandler die auf diesen von der Sensormasse ausgeübten Kräfte mißt und die Kräfte über die Zeit integriert werden und daß das Zeitintegral der Kraft mit einem Auslöseschwellwert verglichen wird, bei dessen Erreichen die Auslösung erfolgt.

8. Beschleunigungssensor nach Anspruch 7, dadurch gekennzeichnet, daß das Zeitintegral entsprechend einer eingestellten Zeitkonstante des Integrationsgliedes ständig gegen Null zurückgeführt wird.

9. Beschleunigungssensor nach Anspruch 8, dadurch gekennzeichnet, daß mit der Integration begonnen wird, wenn eine eine gefährliche Beschleunigung anzeigende Kraft gemessen wird, und daß die Integration auf Null zurückgeführt wird, wenn der Auslöseschwellwert nicht erreicht wird.

10. Beschleunigungssensor nach Anspruch 1, dadurch gekennzeichnet, daß eine Sensormasse (40) mit Magneten, vorzugsweise Permanentmagneten (42), verbunden ist, deren Magnetkraft auf eine in einem fahrzeugfesten Rohr oder Rohrsystem mit geschlossenem Kreislauf befindliche magnetisierbare Flüssigkeit wirkt, die in diesem Kreislauf entsprechend der gewünschten Dämpfung gedrosselt wird.

11. Beschleunigungssensor nach Anspruch 10, dadurch gekennzeichnet, daß das Rohr oder Rohrsystem mit der Sensormasse verbunden und der Magnet fahrzeugfest angeordnet ist.

12. Beschleunigungssensor nach Anspruch 10, dadurch gekennzeichnet, daß eine längsverschieblich geführte Sensormasse (40) im Bereich ihrer Stirnseiten mit Magneten (42) mit ebenen Polflächen (45) verbunden ist, die Anker (46,47) halten, die nur in Richtung von der Sensormasse (40) weg verschieblich sind, und daß die Magnete (42) von dem gestellfest gehaltenen Rohrsystem (54) mit geschlossenem Kreislauf eingefaßt sind.

13. Beschleunigungssensor nach Anspruch 12, dadurch gekennzeichnet, daß die Sensormasse (40) aus einem geschlitzten Rohr mit Kastenprofil besteht, auf dessen durchgehenden gegenüberliegenden Wandungen (43,44) im Bereich ihrer Stirnseiten je 3 quaderförmige Permanentmagnete (42) im Abstand voneinander befestigt sind, daß zwischen die Magnete die Schenkel eines im Querschnitt H-förmigen Kunststoffkörpers (54) greifen, der durch ein den Mittelsteg (55) verlängerndes und durch den Schlitz (41) des Rohres greifendes Stegteil (56) mit einem fahrzeugfesten Teil verbunden ist, das die Schenkel (53) zwischen ihren Stirnseiten mit Bohrungen oder Durchbrüchen (57) versehen sind und daß der Mittelsteg (55) eine zu diesen parallele Bohrung (63) aufweist und daß die Stirnseiten des Kunststoffkörpers durch aufgesetzte H-förmige Deckel oder Kappen geschlossen sind, die mit Verbindungskanälen (60) zur Verbindung jeweils einander gegenüberliegender Bohrungen oder Durchbrüche (57) und mit die Verbindungskanäle (60) mit der Bohrung (63) des Mittelsteges verbindenen Kanälen (61) versehen sind, die Drosselstrecken bilden.

14. Beschleunigungssensor nach Anspruch 13, dadurch gekennzeichnet, daß die Bohrung 63 des Mittelsteges (55) mit Trennflüssigkeit gefüllt ist.

15. Beschleunigungssensor nach einem der Ansprüche 10 bis 14, dadurch gekennzeichnet, daß die Sensormasse (40) durch zwei an ihren Stirnseiten angreifende gestellfeste Blattfedern (65,66) in Richtung auf ihre Mittelstellung beaufschlagt ist.

x = Schlittenverzögerung, bei welcher der Sensor und die Strammfeder freigegeben wird.

(•) = Schlittenverzögerung, bei welcher der Sensor nicht anspricht.

Sensor – Ansprechbereich

**Fig. 1**

**Fig. 2**

**Fig. 3**

**Fig. 4**

**Fig. 5**

Fig. 6

Fig. 7

Fig. 8